# EUROPÄISCHE PATENTSCHRIFT

(11) **EP 4 338 268 B1**
(45) Veröffentlichungstag und Bekanntmachung des Hinweises auf die Patenterteilung: **23.10.2024**
(21) Anmeldenummer: 21752552.6
(22) Anmeldetag: 30.07.2021
(51) Int. Cl.: H02K 15/03

(54) **VERFAHREN UND VORRICHTUNG ZUM AUFPRESSEN EINER VERSTÄRKUNGSHÜLSE AUF EINEN ROTOR EINES ELEKTROMOTORS**
METHOD AND DEVICE FOR PRESSING A REINFORCING SLEEVE ONTO A ROTOR OF AN ELECTRIC MOTOR
PROCÉDÉ ET DISPOSITIF POUR PRESSER UN MANCHON DE RENFORCEMENT SUR UN ROTOR D'UN MOTEUR ÉLECTRIQUE

(43) Veröffentlichungstag der Anmeldung: 20.03.2024
(73) Patentinhaber: Schunk Kohlenstofftechnik GmbH, 35452 Heuchelheim (DE)
(72) Erfinder: BIER, Volker, 35112 Fronhausen (DE); DRÖSSLER, Marcel, 35392 Gießen (DE)
(74) Vertreter: Qip Patentanwälte Dr. Kuehn & Partner mbB
(86) Internationale Anmeldenummer: PCT/EP2021/071477
(87) Internationale Veröffentlichungsnummer: WO 2023/006225

(56) Entgegenhaltungen:
- CN-A- 112 428 216
- DE-A1- 102007 014 192

## Beschreibung

### GEBIET DER ERFINDUNG

Die vorliegende Erfindung betrifft ein Verfahren zum Aufpressen einer Verstärkungshülse auf einen Rotor eines Elektromotors. Darüber hinaus betrifft die Erfindung eine Vorrichtung zum Ausführen eines solchen Verfahrens.

### HINTERGRUND DER ERFINDUNG

Rotoren von Elektromotoren können bei hohen Drehzahlen erheblichen Fliehkräften ausgesetzt sein. Insbesondere Rotoren, die aus mehreren Komponenten zusammengesetzt sind, sollten daher sehr stabil ausgeführt werden.

Zum Beispiel können an Rotoren bestimmter Elektromotoren mehrere Magnete angebracht sein. Dabei können die Magnete von einem achsenförmigen Trägerkörper gehalten werden, etwa in entsprechenden Aufnahmetaschen des Trägerkörpers aufgenommen sein. Um zu verhindern, dass sich die Magneten durch hohe Fliehkräfte vom Trägerkörper lösen und/oder übermäßig beansprucht werden, oder um den Rotor insgesamt zu versteifen, kann der Rotor mit einer Verstärkungshülse kombiniert werden, die die Magneten oder auch andere Komponenten des Rotors mit einer den Fliehkräften entgegenwirkenden Druckkraft vorspannt. Eine solche Verstärkungshülse, auch Bandage oder Armierungshülse genannt, kann beispielsweise aus Metall oder einem kohlefaserverstärkten Kunststoff (CFK; englisch: carbon-fiber-reinforced plastics, kurz CFRP) gefertigt sein.

Die Verstärkungshülse kann beispielsweise auf den Rotor aufgepresst werden, sodass sich eine Presspassung mit dem Rotor ergibt. Die zum Aufpressen erforderlichen axialen Presskräfte können je nach gewünschter Vorspannung sehr hoch sein, sodass es zu Beschädigungen der Verstärkungshülse kommen kann. Gleichzeitig ist eine möglichst hohe Vorspannung wünschenswert, um die Drehzahlfestigkeit des Rotors zu verbessern.

In der von der Anmelderin zu einem früheren Zeitpunkt eingereichten internationalen Patentanmeldung PCT/EP2020/080224 werden ein Verfahren und eine Vorrichtung zum Fügen einer Armierungshülse auf einen Rotor eines Elektromotors beschrieben, wonach Vakuumsauger an einer äußeren Mantelfläche der Armierungshülse angebracht werden, mit deren Hilfe in Pressrichtung wirkende Kräfte auf die Armierungshülse übertragen werden.

DE 10 2007 014 192 A1 beschreibt ein Verfahren für die Herstellung einer Läuferpaketeinrichtung mit Permanentmagneten am Umfang und einer Bandage. CN 112428216 A beschreibt eine Vorrichtung zum Einpressen einer Kohlefaserumhüllung für einen Hochgeschwindigkeitsmotor vom geteilten Typ.

### ZUSAMMENFASSUNG DER ERFINDUNG UND VORTEILHAFTER AUSFÜHRUNGSFORMEN

Es kann daher ein Bedarf an einem Verfahren zum Aufpressen einer Verstärkungshülse auf einen Rotor eines Elektromotors bestehen, durch das Beschädigungen der Verstärkungshülse beim Aufpressen auf den Rotor vermieden werden können. Darüber hinaus kann ein Bedarf an einer entsprechenden Vorrichtung bestehen.

Einem solchen Bedarf kann mit dem Gegenstand der unabhängigen Ansprüche entsprochen werden. Vorteilhafte Ausführungsformen sind in den abhängigen Ansprüchen, der nachfolgenden Beschreibung und den beigefügten Figuren dargelegt.

Ein erster Aspekt der Erfindung betrifft ein Verfahren zum Aufpressen einer Verstärkungshülse auf einen Rotor eines Elektromotors. Das Verfahren umfasst zumindest die folgenden Schritte: Anbringen eines einen Anschlag aufweisenden Pressrings an der Verstärkungshülse, sodass der Anschlag an einer Stirnkante der Verstärkungshülse anliegt und zumindest ein ringsegmentförmiger Abschnitt des Pressrings zumindest einen ringförmigen und/oder ringsegmentförmigen Abschnitt der Verstärkungshülse, der an der Stirnkante der Verstärkungshülse endet, umgreift, , wobei der Pressring mindestens einen Schlitz, der eine erste Stirnseite des Pressrings mit einer der ersten Stirnseite gegenüberliegenden zweiten Stirnseite des Pressrings verbindet, aufweist; und Aufpressen der Verstärkungshülse auf den Rotor, wobei die Verstärkungshülse gegenüber dem Rotor zentriert wird, sodass eine Längsachse der Verstärkungshülse mit einer Längsachse des Rotors fluchtet, und wobei eine Presskraft in Richtung der miteinander fluchtenden Längsachsen auf den an der Verstärkungshülse angebrachten Pressring aufgebracht wird, sodass die Presskraft über den Anschlag in die Verstärkungshülse eingeleitet wird.

Ein zweiter Aspekt der Erfindung betrifft eine Vorrichtung zum Aufpressen einer Verstärkungshülse auf einen Rotor eines Elektromotors. Die Vorrichtung umfasst zumindest die folgenden Komponenten: einen einen Anschlag aufweisenden Pressring, der derart an der Verstärkungshülse anbringbar ist, dass der Anschlag an einer Stirnkante der Verstärkungshülse anliegt und zumindest ein ringsegmentförmiger Abschnitt des Pressrings zumindest einen ringförmigen und/oder ringsegmentförmigen Abschnitt der Verstärkungshülse, der an der Stirnkante der Verstärkungshülse endet, umgreift, wobei der Pressring mindestens einen Schlitz, der eine erste Stirnseite des Pressrings mit einer der ersten Stirnseite gegenüberliegenden zweiten Stirnseite des Pressrings verbindet, aufweist; und eine Presse zum Aufbringen einer Presskraft auf den an der Verstärkungshülse angebrachten Pressring.

Es wird darauf hingewiesen, dass Merkmale des vor- und nachstehend beschriebenen Verfahrens auch als Merkmale der vor- und nachstehend beschriebenen Vorrichtung aufgefasst werden können und umgekehrt.

Bei der Verstärkungshülse kann es sich um einen rohr-, ring- oder zylinderförmigen Körper handeln, der zumindest einen Abschnitt des Rotors im aufgepressten Zustand ringsum mit einer radial nach innen gerichteten Druckkraft vorspannt. Beispielsweise kann die Verstärkungshülse aus einem Kunststoff, einem Faser-Kunststoff-Verbund wie etwa kohle-, aramid- oder glasfaserverstärktem Kunststoff, einem Metall, einer Metalllegierung oder einer Kombination aus mindestens zwei der vorgenannten Beispiele hergestellt sein. Der Innendurchmesser der Verstärkungshülse kann um einen bestimmten Toleranzwert kleiner als der Außendurchmesser des Rotors sein, wobei der Toleranzwert abhängig von einer zu erzielenden Vorspannkraft, mit der der Rotor in radialer Richtung vorgespannt werden soll, gewählt sein kann.

Bei dem Pressring kann es sich ebenfalls um einen rohr-, ring- oder zylinderförmigen Körper oder aber um einen ringsegmentförmigen Körper handeln. Im letzteren Fall kann der Pressring an mindestens einer Stelle geschlitzt sein und durch Verkleinern des jeweiligen Schlitzes, beispielsweise mittels einer oder mehrerer Schrauben oder eines sonstigen geeigneten Spannmittels, in seinem Durchmesser veränderbar sein. Somit weist der Pressring in radialer Richtung eine gute elastische Verformbarkeit auf. Zudem kann der Pressring dadurch bei Bedarf an der Verstärkungshülse befestigt, d. h. festgeklemmt werden. Der Pressring kann in manchen Ausgestaltungen auch als Klemmring bezeichnet werden. Möglich ist aber auch eine ungeschlitzte Ausführung des Pressrings, sofern eine gewisse elastische Verformbarkeit des Pressrings in radialer Richtung gegeben ist. Die radiale Druckkraft, die der Pressring auf die Verstärkungshülse infolge der Dehnung der Verstärkungshülse während des Aufpressens ausübt, sollte in jedem Fall so hoch sein, dass eine radiale Aufweitung oder Ausknickung des vom Pressring umgriffenen Abschnitts der Verstärkungshülse infolge der auf die Verstärkungshülse einwirkenden Presskraft verhindert wird. Der Pressring kann ein-, zwei- oder mehrteilig sein. Beispielsweise kann der Pressring zwei oder mehr als zwei ringsegmentförmige Pressringteile umfassen, die miteinander zu einem einem Ringsegment kombinierbar sind. Der Pressring kann aus dem gleichen oder einem ähnlichen Material oder aus den gleichen oder ähnlichen Materialien wie die Verstärkungshülse hergestellt sein.

Beispielsweise kann der Pressring vor dem Aufpressen ohne oder mit sehr geringem Kraftaufwand auf die Verstärkungshülse aufgeschoben werden, insbesondere wenn die Verstärkungshülse relativ dünnwandig ist. Durch Dehnung der Verstärkungshülse infolge des Aufpressens übt der Pressring dann eine entsprechende Druckkraft in radialer Richtung auf den von ihm umgriffenen Abschnitt der Verstärkungshülse aus. Alternativ kann der Pressring vor dem Aufpressen an der Verstärkungshülse festgeklemmt werden, sofern diese stabil genug ist. Auf diese Weise kann die Verstärkungshülse in dem vom Pressring umgriffenen Abschnitt radial zusammengedrückt, d. h. mit einer radialen Druckkraft vorgespannt werden.

Unter "Anschlag" kann eine Stufe verstanden werden, bis zu der die Verstärkungshülse in den Pressring maximal einschiebbar ist. Der Anschlag kann beispielsweise als eine ringförmige und/oder ringsegmentförmige abgesetzte Pressfläche, nachstehend auch Anschlagfläche genannt, ausgebildet sein, die sich in einer Ebene erstreckt, die schräg oder senkrecht zu einer Längsachse des Pressrings ausgerichtet ist. Ein solcher Anschlag kann beispielsweise durch eine entsprechende Nut entlang einer Stirnkante des Pressrings bereitgestellt sein. Die Pressfläche kann ringförmig, insbesondere kreisringförmig, sein. Eine Breite der Pressfläche, d. h. eine Differenz zwischen einem Außenradius und einem Innenradius der Pressfläche, kann in etwa einer Wandstärke der zu verpressenden Verstärkungshülse entsprechen. Beispielsweise kann die Breite der Pressfläche 30 % bis 300 %, vorzugsweise 70 % bis 130 %, der Wandstärke der Verstärkungshülse betragen. Für viele Anwendungsfälle bedeutet dies, dass die Breite der Pressfläche zwischen 0,1 mm und 10 mm, vorzugsweise zwischen 0,5 mm und 3 mm, liegt. Die Breite der Pressfläche kann nur einen relativ geringen Anteil der Wandstärke des Pressrings ausmachen, d. h., die Breite der Pressfläche entspricht im Regelfall weniger als der Hälfte, vorzugsweise weniger als 20 %, der Wandstärke des Pressrings. Mit der verbleibenden Wandstärke kann der Pressring den ringförmigen und/oder ringsegmentförmigen Abschnitt bilden, mit dem der Pressring den ringförmigen und/oder ringsegmentförmigen Abschnitt der Verstärkungshülse umgreifen und radial von außen abstützen kann. Dieser stützende Abschnitt des Pressrings kann eine Breite aufweisen, die ähnlich groß wie oder größer als die Breite der Pressfläche des Anschlags ist, sodass der stützende Abschnitt des Pressrings die Kräfte, die während des Aufpressens der Verstärkungshülse in radialer Richtung auf ihn ausgeübt werden, aufnehmen kann, ohne dabei beschädigt zu werden.

Das Zentrieren der Verstärkungshülse gegenüber dem Rotor kann manuell und/oder maschinell erfolgen, beispielsweise mittels einer entsprechenden Führung zum Führen einer Bewegung der Verstärkungshülse relativ zum Rotor und/oder mittels eines Zentrierkonus.

Unter "Presse" kann eine Einrichtung zum Erzeugen und Aufbringen der Presskraft sowie zum Aufnehmen entsprechender Reaktionskräfte verstanden werden. Beispielsweise kann es sich bei der Presse um eine Hydraulikpresse oder eine Handhebelpresse handeln.

Mithilfe des Verfahrens bzw. der Vorrichtung, wie sie vor- und nachstehend beschrieben werden, kann die axiale Kraft, die auf die Verstärkungshülse wirkt, wenn sie mit dem Rotor verpresst wird, um einen Längspressverband zu erhalten, deutlich erhöht werden, ohne dass relevante Beschädigungen der Verstärkungshülse, insbesondere in deren randnahen Bereichen, zu erwarten sind. Dies ermöglicht die Verwendung von Verstärkungshülsen mit noch größerem Untermaß gegenüber dem Rotor und demzufolge eine noch stärkere Vorspannung des Rotors in radialer Richtung. Somit kann die Drehzahlfestigkeit des Rotors weiter verbessert werden. Insbesondere wird dadurch eine effiziente Verarbeitung relativ dünnwandiger (kohle)faserverstärkter Kunststoffhülsen als Verstärkungshülsen ermöglicht. Derartige Verstärkungshülsen können beispielsweise eine Wandstärke von 3 mm oder weniger, insbesondere von 2 mm oder weniger, und einen Durchmesser von 50 mm oder weniger, insbesondere von 25 mm oder weniger, aufweisen.

Unter "Aufpressen" kann vor- und nachstehend ein Pressvorgang verstanden werden, bei dem der Rotor und die Verstärkungshülse durch Beaufschlagen der Verstärkungshülse mit einer Presskraft relativ zueinander in einander entgegengesetzten axialen Richtungen bewegt werden. Dies kann dadurch erfolgen, dass die Verstärkungshülse auf den festgelegten Rotor zubewegt wird, der Rotor auf die festgelegte Verstärkungshülse zubewegt wird oder die Verstärkungshülse und der Rotor gleichzeitig aufeinander zubewegt werden.

Ohne den Umfang der Erfindung in irgendeiner Weise zu beschränken, können Ideen und mögliche Merkmale zu Ausführungsformen der Erfindung unter anderem als auf den nachstehend beschriebenen Gedanken und Erkenntnissen beruhend angesehen werden.

Gemäß einer Ausführungsform kann eine faserverstärkte Kunststoffhülse als die Verstärkungshülse verwendet werden. Die Kunststoffhülse kann beispielsweise mit Kohle-, Aramid- und/oder Glasfasern verstärkt sein. Dabei kann die Kunststoffhülse aus mehreren Lagen solcher Fasern gebildet sein, die durch eine geeignete Kunststoffmatrix zusammengehalten werden. Die Kunststoffmatrix kann beispielsweise einen Thermo- oder Duroplast, insbesondere Epoxidharz, umfassen. Eine solche Verstärkungshülse weist eine sehr hohe Steifigkeit und Belastbarkeit in radialer Richtung und eine sehr hohe Festigkeit bei relativ niedrigem Gewicht auf. Wird eine solche Verstärkungshülse auf den Rotor gepresst, so kann der Rotor in radialer Richtung besonders stark vorgespannt werden, was sich positiv auf dessen Drehzahlfestigkeit auswirkt. Auch können auf diese Weise - aufgrund des relativ niedrigen Ausdehnungskoeffizienten des faserverstärken Kunststoffs - temperaturbedingte Schwankungen der radialen Vorspannkraft, mit der der Rotor mittels der Verstärkungshülse vorgespannt wird, minimiert werden. Anders ausgedrückt unterliegen beispielsweise Verstärkungshülsen aus kohlefaserverstärktem Kunststoff bei Temperaturschwankungen nur sehr geringen Dimensionsänderungen, sodass sie auch bei temporär erhöhten Betriebstemperaturen für eine sehr gute Stabilisierung des Rotors sorgen können.

Allerdings wurde beobachtet, dass insbesondere dünnwandige faserverstärkte Kunststoffhülsen den beim Aufpressen axial wirkenden Kräften nicht immer problemlos standhalten können, sodass bislang das Risiko bestand, dass die Kunststoffhülsen während des Aufpressens beschädigt werden.

Mithilfe des vor- und nachstehend beschriebenen Pressrings kann nun verhindert werden, dass vor allem außenliegende Faserlagen der Verstärkungshülse beim Aufpressen auf den Rotor beschädigt oder verformt werden.

Gemäß einer Ausführungsform kann ein Außendurchmesser der Verstärkungshülse kleiner als 50 mm, insbesondere kleiner als 25 mm, sein. Zusätzlich oder alternativ kann ein Innendurchmesser der Verstärkungshülse um mindestens 0,1 mm, insbesondere um mindestens 0,2 mm, kleiner als ein Außendurchmesser des Rotors sein. Dabei kann die Verstärkungshülse beispielsweise eine Wandstärke von weniger als 2 mm, vorzugsweise von weniger als 1 mm oder sogar von weniger als 0,5 mm, aufweisen. In bestimmten Anwendungen können sogar Verstärkungshülsen mit einer Wandstärke von nur 0,3 mm als Bandagen für Rotoren dienen. Verstärkungshülsen mit derartigen Maßen können gegenüber erhöhten Presskräften besonders empfindlich reagieren. Des Weiteren ist es aufgrund der entsprechend verkleinerten Mantelfläche der Verstärkungshülse schwierig, zusätzliche Halterungen außen an der Verstärkungshülse zu befestigen, wie beispielsweise in der eingangs genannten PCT/EP2020/080224 beschrieben, wodurch ein auf die Stirnkante der Verstärkungshülse wirkender Anteil der Presskraft möglicherweise reduziert werden könnte. Derartige Maßnahmen erübrigen sich dank des vor- und nachstehend beschriebenen Verfahrens, denn es konnte beobachtet werden, dass damit nachteilige Auswirkungen sehr hoher Presskräfte auf derartige Verstärkungshülsen vollständig vermieden werden können. In bestimmten Konstellationen kann es jedoch sinnvoll sein, das Verfahren mit derartigen Maßnahmen zu kombinieren.

Gemäß einer Ausführungsform kann die Presskraft mindestens 20 kN, insbesondere mindestens 30 kN, betragen. Es wurde beobachtet, dass bei Presskräften dieser Größenordnung Beschädigungen der Verstärkungshülse gehäuft auftreten, wenn die Verstärkungshülse auf herkömmliche Art und Weise verpresst wird. Andererseits sind solche hohen Presskräfte erwünscht, um eine entsprechend starke radiale Vorspannung des Rotors zu erreichen. In Versuchen konnte jedoch gezeigt werden, dass Beschädigungen der Verstärkungshülse bei derartigen Presskräften nicht auftreten, wenn die Verstärkungshülse im vor- und nachstehend beschriebenen Verfahren aufgepresst wird.

Gemäß einer Ausführungsform kann die Verstärkungshülse über einen zwischen der Verstärkungshülse und dem Rotor angeordneten und zum Rotor hin breiter werdenden Zentrierkonus gegenüber dem Rotor zentriert und/oder auf den Rotor aufgepresst werden. Der Zentrierkonus kann beispielsweise zumindest abschnittsweise kegelförmig oder kegelstumpfförmig ausgebildet sein. Die Breite des Zentrierkonus kann zum Rotor hin stetig zunehmen. Dabei kann die Breite linear und/oder nicht linear zunehmen. Auf diese Weise kann die Verstärkungshülse ohne zusätzliche Maßnahmen sehr genau gegenüber dem Rotor positioniert werden, sodass beispielsweise ein Verkanten der Verstärkungshülse vermieden werden kann. Zusätzlich kann ein solcher Zentrierkonus zum allmählichen Aufweiten der Verstärkungshülse auf einen Außendurchmesser des Rotors verwendet werden, wodurch die zum Aufpressen der Verstärkungshülse erforderliche Presskraft bei gleichbleibender radialer Vorspannung des Rotors unter Umständen verringert werden kann.

Gemäß einer Ausführungsform kann ein größter Außendurchmesser des Zentrierkonus größer als ein Innendurchmesser der Verstärkungshülse sein. Zusätzlich oder alternativ kann der größte Außendurchmesser des Zentrierkonus mindestens so groß wie ein Außendurchmesser des Rotors sein. Anders ausgedrückt kann der Zentrierkonus an seiner breitesten Stelle mindestens so breit wie der Rotor sein. Dabei kann der Rotor zylinderförmig mit konstantem Außendurchmesser ausgebildet sein. Auf diese Weise kann das Aufpressen der Verstärkungshülse auf den Rotor weiter vereinfacht werden.

Der Pressring weist mindestens einen Schlitz, der eine erste Stirnseite des Pressrings mit einer der ersten Stirnseite gegenüberliegenden zweiten Stirnseite des Pressrings verbindet, auf. Gemäß einer Ausführungsform kann der Pressring ferner eine Verstelleinrichtung zum Verstellen einer Breite des Schlitzes aufweisen. Bei dem Schlitz kann es sich beispielsweise um einen axialen Schlitz oder einen diagonal schräg zwischen der ersten und der zweiten Stirnseite verlaufenden Schlitz handeln. Die Verstelleinrichtung kann im einfachsten Fall durch eine Schraubverbindung realisiert sein. Möglich ist aber beispielsweise auch eine mittels eines Hebels betätigbare Schnellspanneinrichtung oder eine Federspanneinrichtung zum radialen Vorspannen des Pressrings mittels Federkraft. Auf diese Weise kann der Durchmesser des Pressrings präzise an unterschiedlich große Verstärkungshülsen angepasst werden.

Gemäß einer Ausführungsform kann der Pressring an seiner Außenfläche zwei Rippen aufweisen, die sich jeweils entlang einer Längskante des Schlitzes erstrecken. Dabei kann die Verstelleinrichtung ausgebildet sein, um die zwei Rippen zusammenzudrücken, sodass die Breite des Schlitzes verringert wird. Unter "Rippe" kann ein länglicher Vorsprung an einer äußeren Mantelfläche des Pressrings verstanden werden. Die beiden Rippen können im Wesentlichen parallel zueinander verlaufen. Mithilfe eines derartigen Spannflansches kann der Pressring in sehr einfacher und effektiver Weise in seinem Innendurchmesser verkleinert werden.

Gemäß einer Ausführungsform kann der Anschlag eine ringsegmentförmige Anschlagfläche umfassen, die sich zumindest teilweise entlang eines Innenumfangs des Pressrings erstrecken kann. Die Anschlagfläche kann gegenüber einer Stirnfläche des Pressrings einen axialen Versatz aufweisen, wobei ein Abschnitt einer inneren Mantelfläche des Pressrings, der die Stirnfläche mit der Anschlagfläche verbindet, als Klemmfläche zum Umgreifen zumindest eines Abschnitts der äußeren Mantelfläche der Verstärkungshülse fungieren kann. Ein solcher Anschlag kann sehr einfach bereitgestellt werden, beispielsweise durch Erzeugen einer entsprechenden stufenförmigen Nut an einer der Stirnseiten des Pressrings.

Es wird darauf hingewiesen, dass mögliche Merkmale und Vorteile von Ausführungsformen der Erfindung vor- und nachstehend teils mit Bezug auf ein Verfahren zum Aufpressen einer Verstärkungshülse auf einen Rotor eines Elektromotors, teils mit Bezug auf eine Vorrichtung, die zur Ausführung dieses Verfahrens besonders entwickelt wurde, beschrieben werden.

### KURZE BESCHREIBUNG DER ZEICHNUNGEN

Nachfolgend werden vorteilhafte Ausführungsformen der Erfindung unter Bezugnahme auf die beigefügten Zeichnungen weiter erläutert, wobei weder die Zeichnungen noch die Erläuterungen als die Erfindung in irgendeiner Weise einschränkend auszulegen sind.
Figur 1 zeigt eine Vorrichtung zum Aufpressen einer Verstärkungshülse auf einen Rotor eines Elektromotors gemäß einer Ausführungsform der vorliegenden Erfindung.
Figur 2 zeigt eine Rückansicht eines Pressrings aus Figur 1.
Figur 3 zeigt einen Schnitt durch den Pressring aus Figur 1 entlang einer Schnittlinie III-III.

Die Figuren sind lediglich schematisch und nicht maßstabsgetreu. Gleiche Bezugszeichen bezeichnen in den verschiedenen Zeichnungen gleiche bzw. gleichwirkende Merkmale.

### BESCHREIBUNG VORTEILHAFTER AUSFÜHRUNGSFORMEN

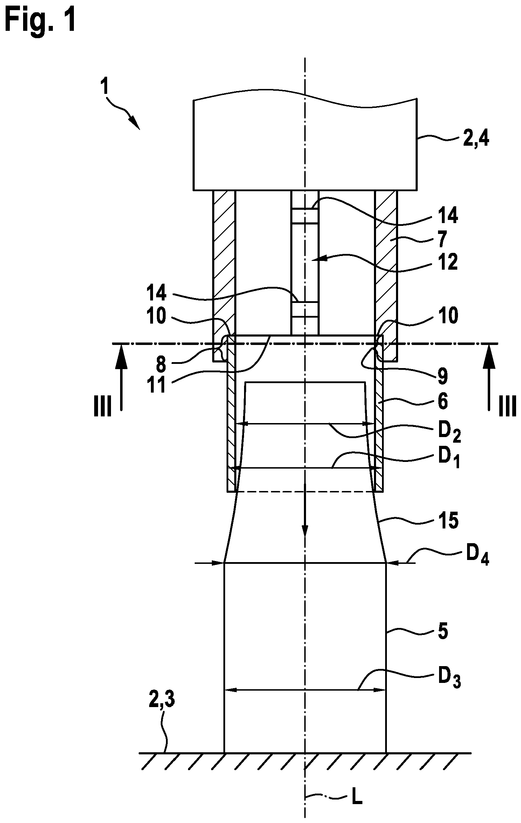

Figur 1 zeigt eine Vorrichtung 1 mit einer Presse 2, die in diesem Beispiel eine horizontale Auflage 3 und ein in vertikaler Richtung bewegbares Pressstück 4 umfasst. Auf der Auflage 3 ist ein Rotor 5 eines Elektromotors (nicht gezeigt) positioniert. Zwischen dem Rotor 5 und dem Pressstück 4 ist eine Verstärkungshülse 6 angeordnet, hier eine kohlefaserverstärkte Kunststoffhülse, mit der der Rotor 5 bandagiert werden soll, indem die Verstärkungshülse 6 axial, hier also in der vertikalen Richtung, auf den Rotor 5 aufgepresst wird.

Um den Rotor 5 mittels der aufgepressten Verstärkungshülse 6 in radialer Richtung mit einer ausreichend hohen Vorspannkraft vorzuspannen, weist die Verstärkungshülse 6 gegenüber dem Rotor 5 ein deutliches Untermaß auf, sodass eine entsprechend hohe Presskraft zum Aufpressen der Verstärkungshülse 6 erforderlich ist, beispielsweise eine Presskraft von mindestens 20 kN, insbesondere von mindestens 30 kN. Dabei kann die Verstärkungshülse 6 einen Außendurchmesser D₁ von weniger als 50 mm, insbesondere von 25 mm oder weniger, und einen Innendurchmesser D₂ aufweisen, der um mindestens 0,1 mm, beispielsweise um mindestens 0,2 mm, kleiner als ein Außendurchmesser D₃ des Rotors 5 ist.

Um Beschädigungen der Verstärkungshülse 6 zu vermeiden, wird die Presskraft nicht unmittelbar vom Pressstück 4 auf die Verstärkungshülse 6 übertragen, sondern über einen Pressring 7, der an einem dem Pressstück 4 zugewandten ringförmigen Außenabschnitt 8 der Verstärkungshülse 6 angebracht ist. Dabei wird der Außenabschnitt 8 von einem ringsegmentförmigen Innenabschnitt 9 des Pressrings 7 umgriffen.

Die in Figur 1 gezeigten Größenverhältnisse zwischen dem Außenabschnitt 8 und der restlichen Verstärkungshülse 6 bzw. zwischen dem Innenabschnitt 9 und dem restlichen Pressring 7 sind als bloße Beispiele aufzufassen und können je nach Anwendung deutlich von Figur 1 abweichen.

Ferner weist der Pressring 7 einen Anschlag 10 auf, wobei die Verstärkungshülse 6 so weit in den Pressring 7 eingeschoben ist, dass sie mit ihrer Stirnkante 11 am Anschlag 10 anliegt.

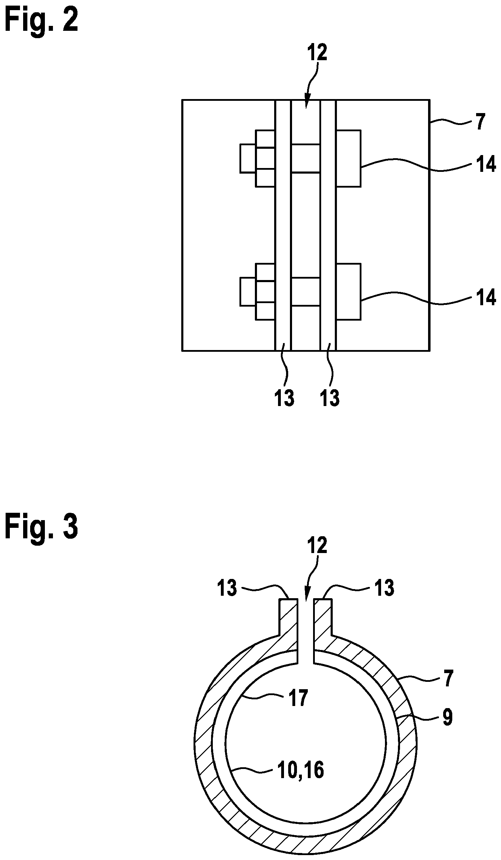

In diesem Beispiel weist der Pressring 7 einen axialen Schlitz 12 auf, der sich durchgehend zwischen den zwei Stirnseiten des Pressrings 7 erstreckt. Entlang der Längskanten des Schlitzes 12 erstreckt sich jeweils eine Rippe 13 (siehe Figur 2 und Figur 3), die radial nach außen vom Pressring 7 absteht. Um die Breite des Schlitzes 12 zu verringern, sind die beiden Rippen 13 mittels zweier Schraubverbindungen 14 miteinander verspannbar.

Durch Verspannen der Rippen 13 ist es beispielsweise auch möglich, den Pressring 7 an der Verstärkungshülse 6 festzuklemmen, etwa derart, dass der Außenabschnitt 8 über den Innenabschnitt 9 mit einer radialen Klemmkraft vorgespannt wird.

Beim eigentlichen Pressvorgang wird die Verstärkungshülse 6 gegenüber dem Rotor 5 zentriert, sodass deren jeweilige Längsachsen L miteinander fluchten. In diesem Beispiel erfolgt das Zentrieren mithilfe eines Zentrierkonus 15, der zwischen dem Rotor 5 und der Verstärkungshülse 6 platziert ist und der zum Rotor 5 hin zunehmend breiter wird. Um ein Verkanten der Verstärkungshülse 6 zu vermeiden und die Verstärkungshülse 6 in geeigneter Weise aufzuweiten, weist der Zentrierkonus 15 seinen größten Außendurchmesser D₄ an seinem dem Rotor 5 zugewandten Ende auf, wobei der größte Außendurchmesser D₄ zweckmäßigerweise mindestens so groß wie der Außendurchmesser D₃ des Rotors 5 ist.

Durch Verringern eines vertikalen Abstands des Pressstücks 4 zur Auflage 3, beispielsweise hydraulisch oder mechanisch, wird der Pressring 7 mit der erforderlichen Presskraft beaufschlagt, wobei die Presskraft ausschließlich, oder zumindest größtenteils, über den Anschlag 10 in die Verstärkungshülse 6 eingeleitet wird, sodass die Verstärkungshülse 6 auf den Rotor 5 aufgepresst wird. Dadurch, dass der Außenabschnitt 8 während des Pressvorgangs vom Pressring 7 zusammengepresst wird, wird eine radiale Aufweitung des Außenabschnitts 8, beispielsweise durch Ausknicken oder Ausbeulen, auch bei sehr hoher axialer Belastung wirksam verhindert.

Aufgrund der elastischen Schraubverbindungen 14 kann der Pressring 7 der zunehmenden Aufweitung der Verstärkungshülse 6 mittels des Zentrierkonus 15 folgen, ohne dass es zum Bruch oder zu sonstigen Beschädigungen des Pressrings 7 kommt.

In der in Figur 3 gezeigten Schnittansicht des Pressrings 7 ist zu erkennen, dass der Anschlag 10 eine ringsegmentförmige Anschlagfläche 16 umfassen kann, die sich in diesem Beispiel, mit Ausnahme des Schlitzes 12, durchgehend entlang eines Innenumfangs 17 des Pressrings 7 erstreckt. (Aus Gründen der Übersichtlichkeit wurden die Schraubverbindungen 14 in Figur 3 weggelassen.)

Abschließend wird darauf hingewiesen, dass Begriffe wie "aufweisend", "umfassend" usw. keine anderen Elemente oder Schritte ausschließen und Begriffe wie "eine" oder "ein" keine Vielzahl ausschließen.

### BEZUGSZEICHENLISTE

- 1: Vorrichtung
- 2: Presse
- 3: Auflage
- 4: Pressstück
- 5: Rotor
- 6: Verstärkungshülse
- 7: Pressring
- 8: Außenabschnitt
- 9: Innenabschnitt
- 10: Anschlag
- 11: Stirnkante
- 12: Schlitz
- 13: Rippe
- 14: Schraubverbindung
- 15: Zentrierkonus
- 16: Anschlagfläche
- 17: Innenumfang
- D₁: Außendurchmesser der Verstärkungshülse
- D₂: Innendurchmesser der Verstärkungshülse
- D₃: Außendurchmesser des Rotors
- D₄: größter Außendurchmesser des Zentrierkonus
- L: Längsachse

## Patentansprüche

1. Verfahren zum Aufpressen einer Verstärkungshülse (6) auf einen Rotor (5) eines Elektromotors, wobei das Verfahren umfasst:
Anbringen eines einen Anschlag (10) aufweisenden Pressrings (7) an der Verstärkungshülse (6), sodass der Anschlag (10) an einer Stirnkante (11) der Verstärkungshülse (6) anliegt und zumindest ein ringsegmentförmiger Abschnitt (9) des Pressrings (7) zumindest einen ringförmigen und/oder ringsegmentförmigen Abschnitt (8) der Verstärkungshülse (6), der an der Stirnkante (11) der Verstärkungshülse (6) endet, umgreift, wobei der Pressring (7) mindestens einen Schlitz (12), der eine erste Stirnseite des Pressrings (7) mit einer der ersten Stirnseite gegenüberliegenden zweiten Stirnseite des Pressrings (7) verbindet, aufweist; und
Aufpressen der Verstärkungshülse (6) auf den Rotor (5), wobei die Verstärkungshülse (6) gegenüber dem Rotor (5) zentriert wird, sodass eine Längsachse (L) der Verstärkungshülse (6) mit einer Längsachse (L) des Rotors (5) fluchtet, und wobei eine Presskraft in Richtung der miteinander fluchtenden Längsachsen (L) auf den an der Verstärkungshülse (6) angebrachten Pressring (7) aufgebracht wird, sodass die Presskraft über den Anschlag (10) in die Verstärkungshülse (6) eingeleitet wird.

2. Verfahren nach Anspruch 1,
wobei eine faserverstärkte Kunststoffhülse als die Verstärkungshülse (6) verwendet wird.

3. Verfahren nach einem der vorhergehenden Ansprüche,
wobei ein Außendurchmesser (D₁) der Verstärkungshülse (6) kleiner als 50 mm, insbesondere kleiner als 25 mm, ist; und/oder
wobei ein Innendurchmesser (D₂) der Verstärkungshülse (6) um mindestens 0,1 mm, insbesondere um mindestens 0,2 mm, kleiner als ein Außendurchmesser (D₃) des Rotors (5) ist.

4. Verfahren nach einem der vorhergehenden Ansprüche,
wobei die Presskraft mindestens 20 kN, insbesondere mindestens 30 kN, beträgt.

5. Verfahren nach einem der vorhergehenden Ansprüche,
wobei die Verstärkungshülse (6) über einen zwischen der Verstärkungshülse (6) und dem Rotor (5) angeordneten und zum Rotor (5) hin breiter werdenden Zentrierkonus (15) gegenüber dem Rotor (5) zentriert und/oder auf den Rotor (5) aufgepresst wird.

6. Verfahren nach Anspruch 5,
wobei ein größter Außendurchmesser (D₄) des Zentrierkonus (15) größer als ein Innendurchmesser (D₂) der Verstärkungshülse (6) ist und/oder mindestens so groß wie ein Außendurchmesser (D₃) des Rotors (5) ist.

7. Vorrichtung (1) zum Aufpressen einer Verstärkungshülse (6) auf einen Rotor (5) eines Elektromotors, wobei die Vorrichtung (1) umfasst:
einen einen Anschlag (10) aufweisenden Pressring (7), der derart an der Verstärkungshülse (6) anbringbar ist, dass der Anschlag (10) an einer Stirnkante (11) der Verstärkungshülse (6) anliegt und zumindest ein ringsegmentförmiger Abschnitt (9) des Pressrings (7) zumindest einen ringförmigen und/oder ringsegmentförmigen Abschnitt (8) der Verstärkungshülse (6), der an der Stirnkante (11) der Verstärkungshülse (6) endet, umgreift, wobei der Pressring (7) mindestens einen Schlitz (12), der eine erste Stirnseite des Pressrings (7) mit einer der ersten Stirnseite gegenüberliegenden zweiten Stirnseite des Pressrings (7) verbindet, aufweist; und
eine Presse (2) zum Aufbringen einer Presskraft auf den an der Verstärkungshülse (6) angebrachten Pressring (7).

8. Vorrichtung (1) nach Anspruch 7,
wobei der Pressring (7) eine Verstelleinrichtung (14) zum Verstellen einer Breite des Schlitzes (12) des Pressrings aufweist.

9. Vorrichtung (1) nach Anspruch 8,
wobei der Pressring (7) an seiner Außenfläche zwei Rippen (13) aufweist, die sich jeweils entlang einer Längskante des Schlitzes (12) erstrecken;
wobei die Verstelleinrichtung (14) ausgebildet ist, um die zwei Rippen (13) zusammenzudrücken, sodass die Breite des Schlitzes (12) verringert wird.

10. Vorrichtung (1) nach einem der Ansprüche 7 bis 9,
wobei der Anschlag (10) eine ringsegmentförmige Anschlagfläche (16) umfasst, die sich zumindest teilweise entlang eines Innenumfangs (17) des Pressrings (7) erstreckt.

## Claims

1. Method for pressing a reinforcing sleeve (6) onto a rotor (5) of an electric motor, the method comprising:
affixing a press ring (7) having a stop (10) to the reinforcing sleeve (6), so that the stop (10) abuts an end face (11) of the reinforcing sleeve (6), and at least one ring-segment-shaped section (9) of the press ring (7) embraces at least one annular and/or ring-segment-shaped section (8) of the reinforcing sleeve (6) that terminates at the end face (11) of the reinforcing sleeve (6), wherein the press ring (7) has at least one slot (12) connecting a first end face of the press ring (7) to a second end face of the press ring (7) opposite the first end face; and
pressing the reinforcing sleeve (6) onto the rotor (5), the reinforcing sleeve (6) being centered relative to the rotor (5) so that a longitudinal axis (L) of the reinforcing sleeve (6) is aligned with a longitudinal axis (L) of the rotor (5), and a pressing force being applied to the press ring (7) affixed to the reinforcing sleeve (6) in the direction of the aligned longitudinal axes (L) so that the pressing force is introduced into the reinforcing sleeve (6) via the stop (10).

2. Method according to claim 1,
wherein a fiber-reinforced plastic sleeve is used as the reinforcing sleeve (6).

3. Method according to any of the preceding claims,
wherein an outer diameter (D₁) of the reinforcing sleeve (6) is smaller than 50 mm, in particular smaller than 25 mm; and/or
wherein an inner diameter (D₂) of the reinforcing sleeve (6) is smaller than an outer diameter (D₃) of the rotor (5) by at least 0.1 mm, in particular by at least 0.2 mm.

4. Method according to any of the preceding claims,
wherein the pressing force is at least 20 kN, in particular at least 30 kN.

5. Method according to any of the preceding claims,
wherein the reinforcing sleeve (6) is centered relative to the rotor (5) and/or pressed onto the rotor (5) via a centering cone (15) disposed between the reinforcing sleeve (6) and the rotor (5) and widening towards the rotor (5).

6. Method according to claim 5,
wherein a largest outer diameter (D₄) of the centering cone (15) is larger than an inner diameter (D₂) of the reinforcing sleeve (6) and/or is at least as large as an outer diameter (D₃) of the rotor (5).

7. Device (1) for pressing a reinforcing sleeve (6) onto a rotor (5) of an electric motor, the device (1) comprising:
a press ring (7) having a stop (10), the press ring being affixable to the reinforcing sleeve (6) such that the stop (10) abuts an end face (11) of the reinforcing sleeve (6) and at least one ring-segment-shaped section (9) of the press ring (7) embraces at least one annular and/or ring-segment-shaped section (8) of the reinforcing sleeve (6) that terminates at the end face (11) of the reinforcing sleeve (6), wherein the press ring (7) has at least one slot (12) connecting a first end face of the press ring (7) to a second end face of the press ring (7) opposite the first end face; and
a press (2) for applying a pressing force to the press ring (7) affixed to the reinforcing sleeve (6).

8. Device (1) according to claim 7,
wherein the press ring (7) has an adjustment device (14) for adjusting a width of the slot (12) of the press ring.

9. Device (1) according to claim 8,
wherein the press ring (7) has two ribs (13) on its outer surface, each rib (13) extending along a longitudinal edge of the slot (12);
wherein the adjustment device (14) is configured to compress the two ribs (13) together so that the width of the slot (12) is reduced.

10. Device (1) according to one of claims 7 to 9,
wherein the stop (10) comprises a ring segment-shaped stop surface (16) extending at least partially along an inner circumference (17) of the press ring (7).

## Revendications

1. Procédé pour emmancher par pression un manchon de renforcement (6) sur un rotor (5) d'un moteur électrique, dans lequel le procédé comprend de :
rapporter une bague de pression (7) comportant une butée (10) sur le manchon de renforcement (6), de sorte que la butée (10) s'appuie contre un bord frontal (11) du manchon de renforcement (6) et au moins une section (9) en forme de segment annulaire de la bague de pression (7) s'engage autour d'au moins une section (8) en forme d'anneau et/ou de segment annulaire du manchon de renforcement (6) qui se termine sur le bord frontal (11) du manchon de renforcement (6), la bague de pression (7) comportant au moins une fente (12) qui relie une première face frontale de la bague de pression (7) et une seconde face frontale de la bague de pression (7) située en face de la première face frontale ; et
emmancher par pression le manchon de renforcement (6) sur le rotor (5), le manchon de renforcement (6) étant centré par rapport au rotor (5), de sorte qu'un axe longitudinal (L) du manchon de renforcement (6) est aligné sur un axe longitudinal (L) du rotor (5), et une force de pression en direction des axes longitudinaux (L) alignés étant appliquée sur la bague de pression (7) rapportée sur le manchon de renforcement (6), de sorte que la force de pression est introduite dans le manchon de renforcement (6) par l'intermédiaire de la butée (10).

2. Procédé selon la revendication 1,
dans lequel un manchon en matière plastique renforcé par des fibres est utilisé en tant que manchon de renforcement (6).

3. Procédé selon l'une des revendications précédentes,
dans lequel un diamètre extérieur (D₁) du manchon de renforcement (6) est inférieur à 50 mm, en particulier inférieur à 25 mm ; et/ou
dans lequel un diamètre intérieur (D₂) du manchon de renforcement (6) est inférieur d'au moins 0,1 mm, en particulier d'au moins 0,2 mm, à un diamètre extérieur (D₃) du rotor (5).

4. Procédé selon l'une des revendications précédentes,
dans lequel la force de pression est d'au moins 20 kN, en particulier d'au moins 30 kN.

5. Procédé selon l'une des revendications précédentes,
dans lequel le manchon de renforcement (6) est centré par rapport au rotor (5) et/ou emmanché par pression sur le rotor (5) par l'intermédiaire d'un cône de centrage (15) agencé entre le manchon de renforcement (6) et le rotor (5) et s'élargissant vers le rotor (5).

6. Procédé selon la revendication 5,
dans lequel un diamètre extérieur (D₄) maximal du cône de centrage (15) est supérieur à un diamètre intérieur (D₂) du manchon de renforcement (6) et/ou au moins aussi grand qu'un diamètre extérieur (D₃) du rotor (5).

7. Dispositif (1) pour emmancher par pression un manchon de renforcement (6) sur un rotor (5) d'un moteur électrique, dans lequel le dispositif (1) comprend :
une bague de pression (7) comportant une butée (10), laquelle bague peut se rapporter sur le manchon de renforcement (6) de sorte que la butée (10) s'appuie contre un bord frontal (11) du manchon de renforcement (6) et au moins une section (9) en forme de segment annulaire de la bague de pression (7) s'engage autour d'au moins une section (8) en forme d'anneau et/ou de segment annulaire du manchon de renforcement (6) qui se termine sur le bord frontal (11) du manchon de renforcement (6), dans lequel la bague de pression (7) comporte au moins une fente (12) qui relie une première face frontale de la bague de pression (7) et une seconde face frontale de la bague de pression (7) située en face de la première face frontale ; et
une presse (2) pour appliquer une force de pression sur la bague de pression (7) rapportée sur le manchon de renforcement (6).

8. Dispositif (1) selon la revendication 7,
dans lequel la bague de pression (7) comporte un dispositif de réglage (14) pour régler une largeur de la fente (12) de la bague de pression.

9. Dispositif (1) selon la revendication 8,
dans lequel la bague de pression (7) comporte, au niveau de sa face extérieure, deux nervures (13) qui s'étendent respectivement le long d'un bord longitudinal de la fente (12) ;
dans lequel le dispositif de réglage (14) est conçu pour comprimer les deux nervures (13) de sorte que la largeur de la fente (12) est réduite.

10. Dispositif (1) selon l'une des revendications 7 à 9,
dans lequel la butée (10) comprend une surface de butée (16) en forme de segment annulaire qui s'étend au moins partiellement le long d'une circonférence intérieure (17) de la bague de pression (7).
